# EUROPEAN PATENT APPLICATION

(11) **EP 3 910 819 A1**
(43) Date of publication of application: **17.11.2021**
(21) Application number: 20174424.0
(22) Date of filing: 13.05.2020
(51) Int. Cl.: H04B 10/2575, H04H 40/90, H04N 7/20

(54) **METHOD AND APPARATUS FOR TRANSMITTING DOWN CONVERTED SATELLITE AND UP CONVERTED ULTRA HIGH FREQUENCY DIGITAL TERRESTRIAL TELEVISION SIGNALS THROUGH OPTICAL FIBER NETWORK**

(71) Applicant: UAB "Terra", 51256 Kaunas (LT)
(72) Inventor: SKOROBOGATOV, Genadij, LT-51256 Kaunas (LT)
(74) Representative: Zaboliene, Reda

(57) **Abstract**

The method includes:
- down converting satellite vertical and horizontal polarization signals;
- frequency shifting upwards of horizontal polarization signals;
- up converting of ultra high frequency digital terrestrial television signals;
- passing through very_high frequency digital terrestrial television signals;
- combining of converted satellite signals with converted ultra high frequency and passed through very high frequency digital terrestrial television signals;
- modulating the optical carrier by the combined signals;
- transmitting the modulated optical carrier through the optical fiber network to a receiver;
- demodulating and splitting the received signals;
- recovering the original digital terrestrial television signals within the receiver;
- converting satellite signals to frequencies suitable for processing by customer premises equipment; The apparatus has multiple transmitters, receivers, which contain up and down converters.

## Description

### FIELD OF THE INVENTION

This disclosure generally relates to a transmission of signals from a satellite(s) and a digital terrestrial television tower(s) to a user through an optical fiber network. In particular: it relates to different stages of converting / modifying the mentioned signals, combining, shifting and splitting them, also transmitting and receiving them according to a defined order / scheme, using up and down converting and further frequency shifting downwards and upwards of mentioned signals.

### DISCUSSION OF BACKGROUND ART

In this invention are provided the method and the apparatus for transmitting a plurality of received satellite and digital terrestrial television (DTT) signals through the optical fiber network including the steps of: up and down converting, frequency shifting, combining, modulation, demodulation and splitting according to the defined sequence to recovery original signals from satellite(s) and digital terrestrial television tower(s) within a receiver with further up and down conversion of television signals into output signals suitable for processing by customer premises equipment, like satellite TV set top boxes and TV sets.

Analyzing the background of the invention, the following prior art documents could be mentioned:
The international patent application WO2012112693, which was published on August 23, 2012, describes systems and methods to convert satellite signals to an intermediate frequency signal and selecting modulated digital data within the satellite signals for content decoding. One of the embodiment includes an optical low noise block converter (LNB) including a digital channelizer switch configured to select at least one content channel from an input signal including a plurality of content channels modulated onto a carrier and to output an optical signal including the selected at least one content channel. However, this patent application describes processing of signals only from satellite(s), also includes only conversion of the signals to intermediate frequency and decoding process.

The international patent application WO2015192912, which was published on December 23, 2015, discloses a method which is described for the transmission and reception of digital terrestrial television signals, where said signals comprising a plurality of radio television programs or services receivable by a television receiver in a certain frequency band, wherein at least a portion of said frequency band has been discontinued for the digital terrestrial television signals and assigned to a different service, in particular to a mobile telephony service, such as the LTE type, wherein it is provided to receive said radio television programs or services whose contents are transmitted through Internet type signals that are converted into radio television signals of the terrestrial digital broadcasting type and placed in channels belonging to said portion of said frequency band, where said digital terrestrial television signals not being radiated, but conveyed to said receiver via a coaxial cable distribution system. However, this patent application is focused only on receiving signals from digital terrestrial television tower(s) and distributing them via coaxial cable to the net of users through the Internet.

US2011283330 (US8351796) patent document, which was published on November 17, 2011, discloses a low-noise block down-converter which includes a first down-converting circuit for down-converting and filtering a first polarization signal for outputting a first intermediate-frequency signal, a second down-converting circuit for down-converting and filtering a second polarization signal for outputting a second intermediate-frequency signal, wherein a frequency band of the first intermediate-frequency signal is the same as that of the second intermediate-frequency signal, an oscillator for generating an oscillating signal, outputted to the first down-converting circuit and the second down-converting circuit, a first optical transmitter coupled to the first down-converting circuit for converting the first intermediate-frequency signal into a first optical signal,; and a second optical transmitter coupled to the second down-converting circuit for converting the second intermediate-frequency signal into a second optical signal. However, this application describes down-converting capabilities and filtering process in the low-noise block converting several high frequency signals to optical signals. It is nothing mentioned about the combining of two different type of signals that further are processed in order to get signals suitable for processing by customer premises equipment. Also, no information about splitting and shifting procedures for signals.

US2006193635 (US7509049) patent document, which was published on August 8, 2006, discloses a method and apparatus which are provided for transferring a plurality of satellite signals through an optical communication network. The method includes the steps of selecting a frequency of a local oscillator signal within a guard band between a left polarization signal and a right polarization signal of a first satellite signal of the plurality of satellite signals, frequency shifting the first satellite signal upwards in frequency by the selected frequency. The method further includes the steps of combining the frequency shifted satellite signal with a second satellite signal of the plurality of satellite signals and modulating a optical carrier with the combined signals, transferring the modulated optical carrier to a receiver through an optical fiber and decoding the first and second satellite signals within the receiver. The drawback is that, in this described document, there are signals from the satellite(s) only. In our described invention we have signals from the satellite(s) and from the digital terrestrial television tower(s).

EP16206967.8 patent document, which was published on June 20, 2018, discloses a method and apparatus for transmitting a plurality of received satellite and ultra high frequency digital terrestrial television signals through an optical fiber network. The method comprises: the steps of down converting of satellite vertical and horizontal polarizations signals and further frequency shifting upwards of horizontal polarization signal; the steps of down converting of ultra high frequency digital terrestrial television signals; the steps of combining of converted satellite vertical and horizontal polarization signals with down converted ultra high frequency digital terrestrial television signals and further modulating optical carrier by the combined signals, transmitting the modulated optical carrier through the optical fiber network to a receiver; the steps of demodulating the optical carrier and further splitting and recovering original signals within a receiver with further down converting of satellite signals into output signals suitable for processing by customer premises equipment, like satellite TV set top boxes and TV sets. The main difference between this invention and the newly described invention is that in EP16206967.8 patent document, ultra high frequency digital terrestrial television signals initially are down converted; while in the newly described invention, ultra high frequency digital terrestrial television signals are up converted. This allows transferring vey high frequency digital terrestrial television signals, which was not possible in the previous invention. Therefore, it is a need for a method and the apparatus, which solves the drawbacks of the above-mentioned inventions. Such a method and an apparatus are presented below.

### SUMMARY OF THE INVENTION

The method for transmitting a plurality of received satellite and digital terrestrial television signals through an optical fiber network includes the following steps:
- down converting of satellite vertical and horizontal polarization signals;
- frequency shifting upwards of satellite horizontal polarization signals;
- up converting of ultra high frequency digital terrestrial television signals;
- passing through of very high frequency digital terrestrial television signals;
- combining of converted satellite signals with converted ultra high frequency and passed through very high frequency digital terrestrial television signals;
- modulating an optical carrier by the combined signals;
- transmitting the modulated optical carrier through the optical fiber network to a receiver;
- demodulating the optical carrier within a receiver and splitting demodulated signals;
- recovering the original satellite television signals within the receiver;
- down converting recovered original satellite TV signals into output signals suitable for processing by customer premises equipment.
- down converting ultra high frequency digital terrestrial television into output signals suitable for processing by customer premises equipment;
- passing through of very high frequency digital terrestrial television signals.

The apparatus has multiple transmitters and receivers, which contain up and down converters.

### BRIEF DESCRIPTION OF THE DRAWINGS

Fig. 1 is a simplified block diagram of an optical satellite and digital terrestrial television transmitting and receiving system.
Fig. 2 is a detailed block diagram of the transmitter 12.
Fig. 3 is a detailed block diagram of the receiver 14.
Fig. 4 is a frequency plan used in the digital terrestrial television transmission and receiving system.
Fig. 5. Is a block diagram of the output down converter 46.

### DETAILED DESCRIPTION OF THE INVENTION

The invention presents a method and an apparatus for transmitting down converted satellite and up converted digital terrestrial television signals through an optical fiber network. The following terms, which are used with regard to the description of the apparatus and the method, are defined as follows:
Digital terrestrial television (DTT) signal is a signal, broadcasted by the radio frequency (RF) waves through the terrestrial space in the digital format, using multiplex transmitters and multiple receivers.

Satellite vertical polarization radio frequency (SAT VER RF) or satellite horizontal polarization radio frequency (SAT HOR RF) signal is a signal, which is transmitted through communications satellites orbiting the Earth directly to the user's location.

Digital terrestrial television ultra high radio frequency (DTT UHF RF) signal is a radio frequency signal, preferably in the range of 470-790 MHz.

Digital terrestrial television very high radio frequency (DTT VHF RF) signal is a radio frequency signal, preferably in the range of 47-240 MHz.

Satellite vertical polarization intermediate frequency (SAT VER IF) signal and satellite horizontal polarization intermediate frequency (SAT HOR IF) signal are signals, preferably in the range of 300-2350 MHz, used inside the satellite and digital terrestrial television transmission and receiving system.

The above descriptions should be viewed more than the illustration, not as a restriction. In the embodiments described by those skilled in the art, modifications may be made without deviating from the scope of this invention as defined in the following definition.

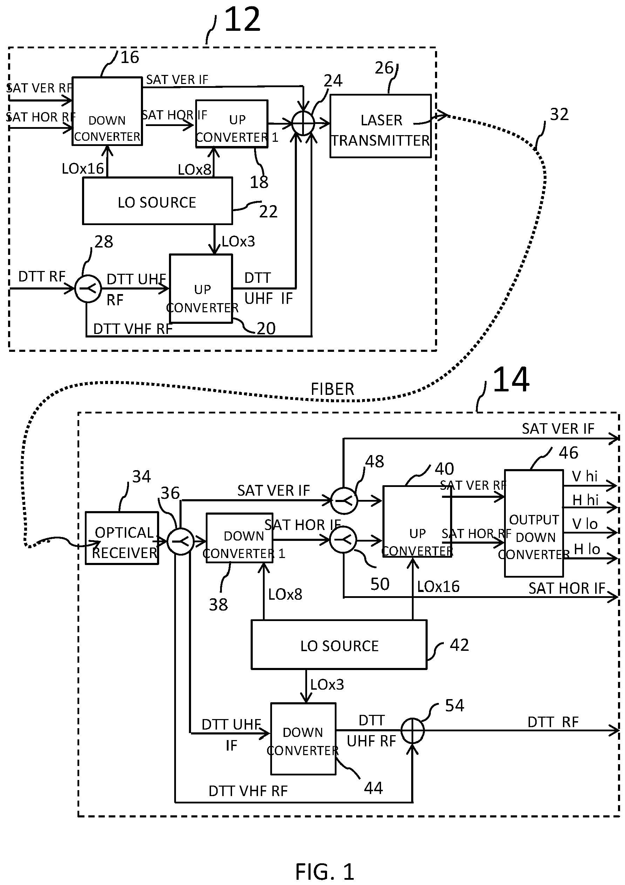

Fig. 1 is a simplified block diagram of an optical satellite and digital terrestrial television transmitting and receiving system, presented in the invention. The system shown in Fig. 1 may include one or more transmitters 12 connected through an optical fiber 32 to one or more optical receivers 14. The transmitter 12 may generate multiple satellite signals from other orbit positions for transmitting and further combining multiple optical carriers to generate optical wavelength-division multiplexing (WDM) signals for transferring over single optical fiber 32. The number of receivers 14 may be increased using optical splitters for splitting optical signal transmitted by the transmitter 12.

As shown in Fig.1 , the relatively high frequency signals of vertical and horizontal polarizations from satellite may be initially converted down within the down converter 16 to relatively low intermediate frequency. The horizontal polarization intermediate frequency signal is converted up within the up converter 18. The ultra high frequency signal of digital terrestrial television is up converted within the up converter 20 to relatively high intermediate frequency. The combined signals from down converter 16, up converter 18, up converter 20 and digital terrestrial television very high frequency splitter 28 may then be used to modulate the laser transmitter 26.

From the transmitter 12 the modulated optical carrier may be transferred through the optical fiber 32 to the receiver 14 located at home of a customer.

The optical carrier within the receiver 14 is demodulated to radio frequency signal by the optical receiver 34 , separated and then are used for recovering original input signal (Fig. 1). The vertical polarization signal is recovered within the up converter 40. The horizontal polarization signal is converted within the down converter 38 and further recovered in up converter 40. The satellite signals of vertical and horizontal polarizations delivered by the up converter 40 are down converted within the output down converter 46 to generate output signals suitable for processing by customer premises equipment, like satellite TV set top boxes and TV sets. The wideband vertical and horizontal polarizations signals provided by the splitters 48 and 50 could be used for processing by customer premises equipment as well. The ultra high frequency digital terrestrial television signals are recovered within the down converter 44. The very high frequency digital terrestrial television signals are through passed.

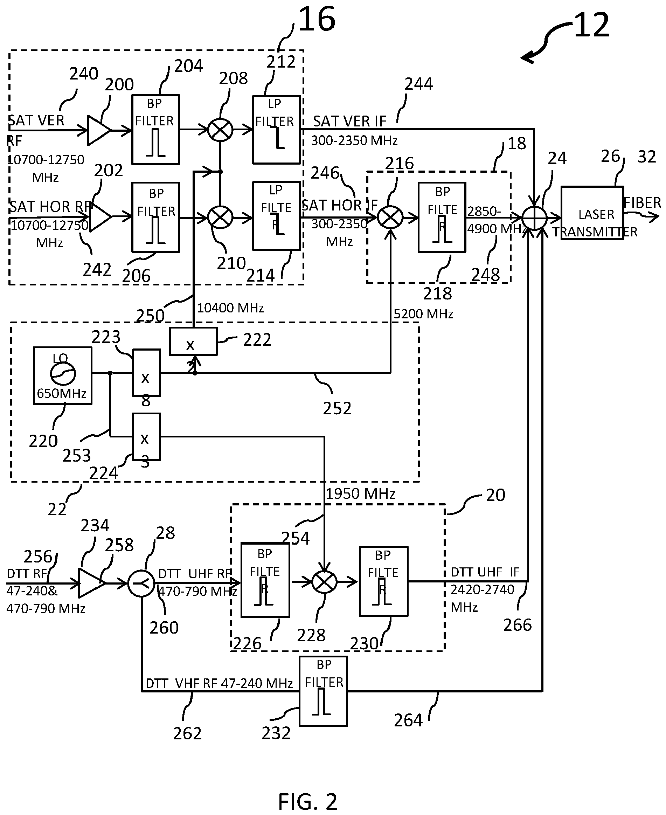

Fig. 2 presents a detailed block diagram of the transmitter 12.

Before being combined in the combiner 24 and further transmitted by the laser transmitter 26 following spectrum transformations are done:
- the received satellite vertical polarization signal 240 is shifted down to generate signal 244,
- the received satellite horizontal polarization signal 242 is shifted down to generate signal 246 and further is shifted up to generate signal 248,
- the received ultra high frequency digital terrestrial television signal 260 is shifted up to generate signal 266.
- the received very high frequency digital terrestrial television signal 262 is through passed to generate signal 264.

The satellite vertical polarization signal 240, which preferably is in the range of 10700-12750 MHz, is amplified by a low noise amplifier 200, further filtered within a band pass filter 204 for image rejection and provided as an input to a frequency mixer 208. Frequency shifting within the frequency mixer 208 is accomplished via a local oscillator signal 250, which preferably is in the range of 10400 MHz, and is provided by the frequency doubler 222 driven by the signal 252. The signal 252, which preferably is in the range of 5200 MHz, is provided by the frequency multiplier 223 with multiplication rate 8 driven by the local oscillator 220.

The signal 244, which preferably is in the range of 300-2350 MHz, is provided by a frequency mixer 208 after filtering within a low pass filter 212 for cleaning spectrum above frequency 2350 MHz, is delivered to the combiner 24.

The satellite horizontal polarization signal 242, which preferably is in the range of 10700-12750 MHz, is amplified by a low noise amplifier 202, further filtered within a band pass filter 206 for image rejection and provided as in input to a frequency mixer 210. Frequency shifting within the frequency mixer 210 is accomplished via a local oscillator signal 250, which preferably is in the range of 10400 MHz, provided by the frequency doubler 222 driven by the signal 252.The signal 252, which preferably is in the range of 5200 MHz, is provided by the frequency multiplier 223 with the multiplication rate 8 driven by the local oscillator 220.

The signal 246, which preferably is in the range of 300-2350 MHz, is provided by the frequency mixer 210 after filtering within a low pass filter 214 for cleaning spectrum above the frequency 2350 MHz and is provided as an input to the frequency mixer 216. The frequency shifting within the frequency mixer 216 is accomplished via the local oscillator signal 252. The signal 252, which preferably is in the range of 5200 MHz, is provided by the frequency multiplier 223 with the multiplication rate 8 driven by the local oscillator 220.

The spectrally inverted signal 248, which preferably is in the range of 2850-4900 MHz, is delivered by a frequency mixer 216 and filtered within a band pass filter 218 for cleaning spectrum outside frequencies 2850-4900 before being combined in the combiner 24.

The ultra high frequency digital terrestrial television signal 260, which preferably is in the range of 470-790 MHz, is amplified by a low noise amplifier 234 and after being separated in the splitter 28 and further filtered within a band filter pass 226 for rejection of unwanted signals is provided as in input to a frequency mixer 228. The frequency shifting within the frequency mixer 228 is accomplished via a local oscillator signal 254, which preferably is in the range of 1950 MHz, provided by a frequency tripler 224 driven by the local oscillator 220. The signal 266, which preferably is in the range of 2420-2740 MHz, is delivered by the frequency mixer 228 after being filtered within a band pass filter 230 for cleaning spectrum outside the frequencies of 2420-2740 MHz, and is delivered to the combiner 24.

The very high frequency digital terrestrial television signal 264 which is preferably in the range of 47-240 MHz is amplified by a low noise amplifier 234 and after being separated in the splitter 28 and further filtered within a band filter pass 232 for rejection of unwanted signals is delivered to the combiner 24.

The sum of signals 244, 248, 264 and 266 provided by the combiner 24 is used to modulate the laser transmitter 26.

Using a single local oscillator 220 for driving all frequency mixers of the transmitter 12 is an obvious advantage of the system: a single , reliatively low frequency (650MHz) local oscillator could be used instead of three oscillators. In addition, a single local oscillator cost less, is more reliable and uses less power. It's production is more simple, it has smaller dimensions and requires less space in the equipment.

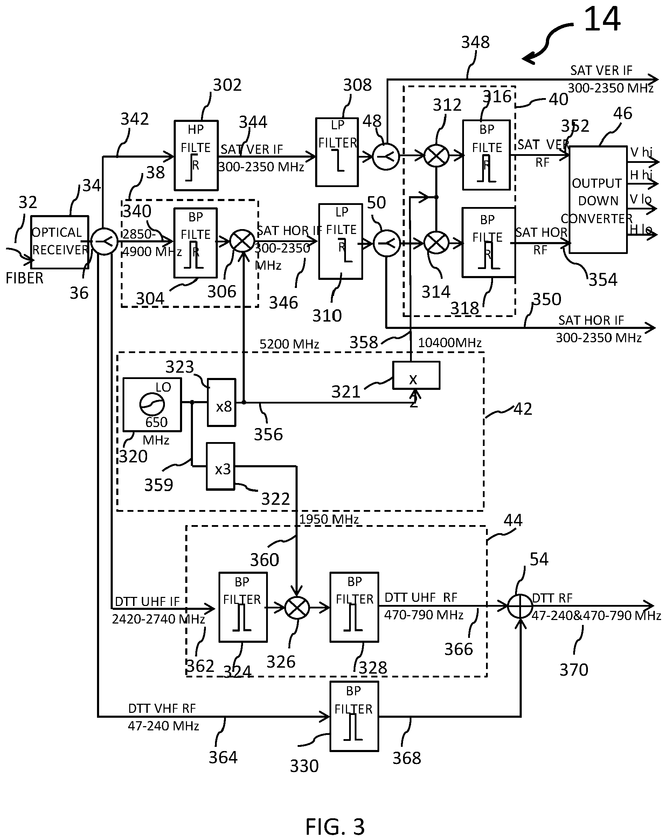

Fig. 3 presents a detailed block diagram of the receiver 14.

Modulated optical carrier is received by the optical receiver 34 and demodulated like the sum of signals 342, 340, 362 and 364 after separating in a splitter 36. Before being recovered, the following spectrum transformations are done :
- the demodulated satellite vertical polarization signal 342 is shifted up to generate signal 352,
- the demodulated satellite horizontal polarization signal 340 is shifted down to generate signal 346 and further shifted up to generate signal 354,
- the demodulated ultra high frequency digital terrestrial television signal 362 is shifted down to generate signal 366.
- the demodulated very high frequency digital terrestrial television signal 364 is through passed to generate signal 368.

After being separated in the splitter 36, the satellite vertical polarization signal 342, which preferably is in the range of 300-2350 MHz, is filtered within a high pass filter 302 for cleaning spectrum below the frequency of 300 MHz, then filtered within a low pass filter 308 for cleaning spectrum above the frequency of 2350 MHz and provided as an input to a splitter 48. After being separated in the splitter 48, the satellite vertical polarization signal 344 is provided as an input signal to a frequency mixer 312 and provided as an output signal 348 for further distribution to customer premises equipment, for example satellite TV set top boxes.

The frequency shifting within the frequency mixer 312 is accomplished via a local oscillator signal 358, which preferably is in the range of 10400 MHz, provided by the frequency doubler 321, driven by the signal 356. The signal 356, which preferably is in the range of 5200 MHz is provided by the frequency multiplier 323 with the multiplication rate 8 driven by the local oscillator 320.

The signal 352, which preferably is in the range of 10700-12750 MHz, is delivered by the frequency mixer 312, and is filtered within a band pass filter 316 for second side band and image rejection. The image rejection - meaning output down converter 46. After being filtered the signal 352 is provided as an input to a down converter 46.

The signal 352 is the recovered satellite vertical polarization signal 240 (Fig. 2).

After being separated in the splitter 36, the spectrally inverted satellite horizontal polarization signal 340, which preferably is in the range of 2850-4900 MHz, is filtered within a band pass filter 304 for rejection of image and unwanted signals and provided as an input to a frequency mixer 306. The frequency shifting within the frequency mixer 306 is accomplished via the local oscillator signal 356, which preferably is in the range of 5200 MHz, provided by the frequency multiplier 323 with the multiplication rate 8, driven by the local oscillator 320. The signal 346, which preferably is in the range of 300-2350 MHz, is delivered by the frequency mixer 306 and is filtered within a low pass filter 310 for spectrum cleaning above 2350 MHz and provided as in input signal to a splitter 50. After being separated in the splitter 50, the satellite vertical polarization signal 346 is provided as an input signal to a frequency mixer 314 and provided as an output signal 350 for further distribution to customer premises equipment, for example satellite TV set top boxes.

The frequency shifting within the frequency mixer 314 is accomplished via a local oscillator signal 358, which preferably is in the range of 10400 MHz, provided by the frequency doubler 321 driven by the signal 356. The signal 356 is provided by the frequency multiplier 323 with the multiplication rate 8, driven by the local oscillator 320.

The signal 354, which preferably is in the range of 10700-12750 MHz, is delivered by the frequency mixer 314, and filtered within a band pass filter 318 for the second side band and image rejection. The image rejection - meaning output down converter 46. After being filtered the signal 354 is provided as an input to a down converter 46.

The signal 354 is the recovered satellite horizontal polarization signal 242 (Fig. 2).

After being separated in the splitter 36, the ultra high frequency digital terrestrial television signal 362, which preferably is in the range of 2420-2740 MHz, is filtered within a band pass filter 324 for the rejection of unwanted signals and provided as an input to a frequency mixer 326. The frequency shifting within the frequency mixer 326 is accomplished via a local oscillator signal 360, which preferably is in the range of 1950 MHz, provided by the frequency tripler 322 driven by the local oscillator 320. The signal 366, which preferably is in the range of 470-790 MHz, is delivered by the frequency mixer 326 is filtered within a band pass filter 328 for the rejection of out of band spurious and is provided as an input signal to an output combiner 54.

The signal 366 is the recovered ultra high frequency digital terrestrial signal 260 (Fig. 2).

After being separated in the splitter 36, the very high frequency digital terrestrial television signal 364, which preferably is in the range of 47-240 MHz, is filtered within a band pass filter 330 for the rejection of unwanted signals and provided as an input signal 368 to the output combiner 54.

The signal 370 delivered to the output by combiner 54 is suitable for processing by customer premises equipment, like satellite TV set top boxes and TV sets

Using a single local oscillator source 320 for driving all frequency mixers of the receiver 14 for recovering original satellite television signals is an obvious advantage of the system a single, reliatively low frequency (650MHz) local oscillator could be used instead of three oscillators. In addition, a single local oscillator cost less, is more reliable and uses less power. It's production is more simple, it has smaller dimensions and requires less space in the equipment.

In conclusion, the method for transmitting a plurality of received satellite and digital terrestrial television signals through an optical fiber network includes the following steps:
- down converting of satellite vertical and horizontal polarization signals;
- frequency shifting upwards of satellite horizontal polarization signals;
- up converting of ultra high frequency digital terrestrial television signals;
- passing through of very high frequency digital terrestrial television signals;
- combining of converted satellite signals with converted ultra high frequency and passed through very high frequency digital terrestrial television signals;
- modulating an optical carrier by the combined signals;
- transmitting the modulated optical carrier through the optical fiber network to a receiver;
- demodulating the optical carrier within a receiver and splitting demodulated signals;
- recovering the original satellite television signals within the receiver;
- down converting recovered original satellite TV signals into output signals suitable for processing by customer premises equipment;
- down converting ultra high frequency digital terrestrial television into output signals suitable for processing by customer premises equipment;
- passing through of very high frequency digital terrestrial television signals.

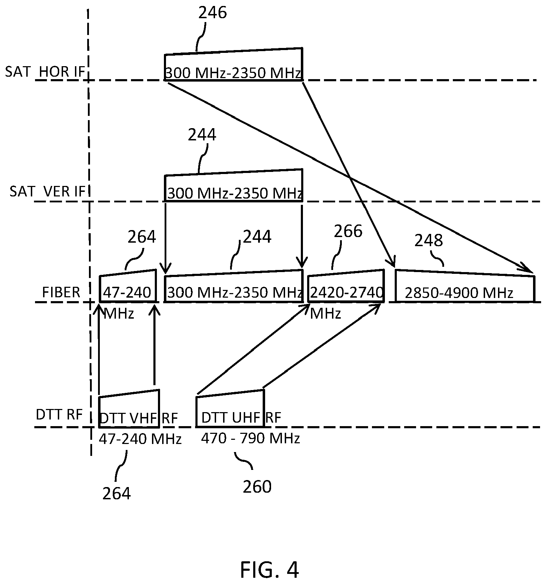

Fig. 4 presents a frequency plan used in the system.

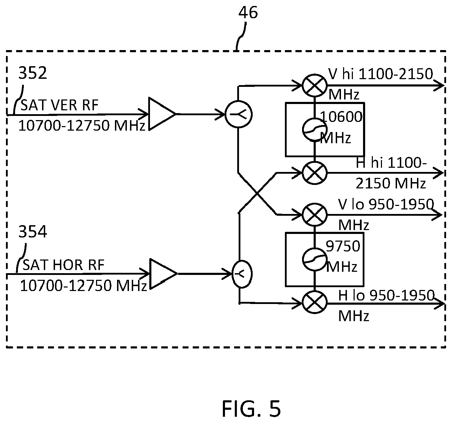

The recovered satellite vertical polarization signal 352 and the satellite horizontal polarization signal 354 is further processed within the output down converter 46 using well know technology, widely used in low noise blocks (LNBs) dedicated for reception of signals from telecommunication satellites. The example of a block diagram of a possible solution is shown in Fig. 5.

As the result, any of the multiple following output satellite signals could be generated: QUATTRO LNB frequencies- vertical high frequency (1100-2150 MHz), horizontal high frequency (1100-2150 MHz), vertical low frequency (950-1950 MHz) and horizontal low frequency (950-1950 MHz). As well as WIDEBANB LNB frequencies: vertical 300-2350 MHZ and horizontal 300-2350 MHz. Also, Wideband LNB signals could be generated of slightly different (shifted) frequencies, for example: vertical 290-2340 MHz and horizontal 290-2340MHz.

In order to illustrate and describe the invention, the description of the preferred embodiments is presented above. This is not a detailed or restrictive description to determine the exact form or embodiment. The above description should be viewed more than the illustration, not as a restriction. It is obvious that specialists in this field can have many modifications and variations. The embodiment is chosen and described in order to best understand the principles of the present invention and their best practical application for the various embodiments with different modifications suitable for a specific use or implementation adaptation.

## Claims

1. A method for transmitting down converted satellite and up converted ultra high frequency digital terrestrial television signals through an optical fiber network, which:
- receives signals from radio frequency sources;
- converts and transmits signals through the optical fiber network;
- receives optical signals from the optical fiber network;
- converts and prepares signals for processing by a customer premises equipment;
**characterized in that** the method has the following steps:
- down converting of satellite vertical and horizontal polarizations signals;
- frequency shifting upwards of satellite horizontal polarization signal,
- up converting of ultra high digital terrestrial television signal;
- passing through very high frequency digital terrestrial television signal;
- combining of converted satellite signals with converted ultra high and passed through very high frequency digital terrestrial television signals;
- modulating an optical carrier by the combined signals;
- transmitting, receiving and converting signals to frequencies suitable for processing by customer premises equipment;
which allows transmitting a plurality of received satellite and digital terrestrial television signals through an optical fiber to the customer premises equipment.

2. The method according to claim 1, **characterized in that** both vertical and horizontal polarization satellite signals are initially down converted and satellite horizontal polarization signals are further frequency shifted upwards.

3. The method according to claims 1-2, **characterized in that** the ultra high digital terrestrial television signals are initially up converted and very high frequency digital terrestrial television signals are passed through.

4. The method according to the preceding claims 1-3, **characterized in that** the optical carrier during the transmission undergo the following steps:
- modulation by the combined signals within the laser transmitter 26;
- transmitting through an optical fiber network 32 to an optical receiver 34;
- receiving by the optical receiver 34;
- demodulation and splitting;
- converting to frequencies suitable for processing by customer premises equipment.

5. The method according to the preceding claims 1-4, **characterized in that** a single local oscillator 220 is used for driving all frequency mixers of the transmitter 12 for converting satellite and digital terrestrial television signals to frequencies suitable for transmitting by a single laser.

6. The method according to the preceding claims 1-5, **characterized in that** a single local oscillator 320 is used for driving all frequency mixers of the receiver 14 for converting satellite and digital terrestrial television signals to frequencies suitable for processing by customer premises equipment.

7. The method according to the preceding claims 1-6, **characterized in that** any of the multiple following satellite output signals may be generated: vertical high frequency (1100-2150 MHz), horizontal high frequency (1100-2150 MHz), vertical low frequency (950-1950 MHz), horizontal low frequency (950-1950 MHz) signals, vertical wideband frequency (300-2350 MHZ) and horizontal wideband frequency (300-2350 MHz).

8. The method according to the preceding claims 1-7, **characterized in that** using this method, the original ultra high digital terrestrial television signals can be recovered.

9. An apparatus for transmitting down converted satellite and up converted ultra high frequency digital terrestrial television signals through the optical fiber network according to claims 1-8, comprising:
- the transmitter 12;
- the optical fiber 32;
- the receiver 14;
**characterized in that** the apparatus has:
- the up converter 20, present at the transmitter 12, for up converting ultra high frequency digital terrestrial television signals to the relatively high intermediate frequency signals;
- the down converter 44, present at the receiver 14, for the recovery of the ultra high frequency digital terrestrial television signals;
- the down converter 16, present at the transmitter 12, for down converting relatively high frequency satellite signals of vertical and horizontal polarizations;
- the up converter 18, present at the transmitter 12, for frequency shifting upwards of horizontal polarization signals;
- up converter 40, present at the receiver 14, for the recovery of original vertical and horizontal polarization satellite signals;
- the output down converter 46, present at the receiver 14, for the generating satellite output signals, suitable for processing by the customer premises equipment;
which allows transmitting a plurality of received satellite and digital terrestrial television signals through an optical fiber 32.

10. The apparatus according to the preceding claim 9, **characterized in that** the transmitter 12 comprises the following functional modules:
- the down converter 16 for down converting of relatively high frequency satellite vertical and horizontal polarizations signals to relatively low intermediate frequency signals;
- the up converter 18 for frequency shifting upwards of horizontal polarization signals;
- the up converter 20 for up converting of the ultra high frequency digital terrestrial television signals to the relatively high intermediate frequency signals;
- the combiner 24 for combining of the down converted satellite vertical polarization signals from the down converter 16 with the up converted satellite horizontal polarization signals from the up converter 18 with the up converted digital terrestrial television signals from the converter 20 and with through passed very high frequency digital terrestrial television signals.
- the single local oscillator source 22 for driving all frequency mixers of the transmitter 12;
- the laser transmitter 26 for transmitting modulated optical carrier through the optical fiber network 32 to the receiver 14.

11. The apparatus according to the preceding claims 9-10, **characterized in that** the receiver 14 comprises the following functional modules:
- the optical receiver 34 for receiving and demodulating the signals from the optical fiber network 32;
- the down converter 38 for down converting of relatively high intermediate frequency satellite horizontal polarizations signals to relatively low intermediate frequency signals;
- the down converter 44 for recovery of the ultra high frequency digital terrestrial television signals;
- the very high frequency digital terrestrial television signals are through passed;
- the up converter 40 for frequency shifting upwards of horizontal and vertical polarization signals;
- the single local oscillator source 42 for driving all frequency mixers of the receiver 14;
- the output down converter 46 for generating output signals, suitable for processing by the customer premises equipment.

12. The apparatus according to the preceding claims 9-11, **characterized in that** the output down converter 46, present at the receiver 14,
- is connected to the optical fiber 32, which receives satellite and digital terrestrial television radio frequency signals;
- is connected to the customer premises equipment, where it delivers multiple output signals: vertical high frequency (1100-2150 MHz), horizontal high frequency (1100-2150 MHz), vertical low frequency (950-1950 MHz) or horizontal low frequency (950-1950 MHz) signals.

## Amended claims

### Amended claims in accordance with Rule 137(2) EPC.

1. A method for transmitting down converted satellite and up converted ultra high frequency digital terrestrial television signals through an optical fiber network, which:
- receives signals from radio frequency sources;
- converts and transmits signals through the optical fiber network;
- receives optical signals from the optical fiber network;
- converts and prepares signals for processing by a customer premises equipment; **characterized in that** the method has the following steps:
- down converting of satellite vertical and horizontal polarizations signals;
- frequency shifting upwards of satellite horizontal polarization signal;
- up converting of ultra high digital terrestrial television signal;
- passing through very high frequency digital terrestrial television signal;
- combining of converted satellite signals with converted ultra high and passed through very high frequency digital terrestrial television signals;
- modulating an optical carrier by the combined signals;
- transmitting, receiving and converting signals to frequencies suitable for processing by customer premises equipment;
which allows transmitting a plurality of received satellite and digital terrestrial television signals through an optical fiber to the customer premises equipment.

2. The method according to claim 1, **characterized in that** both vertical and horizontal polarization satellite signals are initially down converted and satellite horizontal polarization signals are further frequency shifted upwards.

3. The method according to claims 1-2, **characterized in that** the ultra high digital terrestrial television signals are initially up converted and very high frequency digital terrestrial television signals are passed through.

4. The method according to the preceding claims 1-3, **characterized in that** the optical carrier during the transmission undergo the following steps:
- modulation by the combined signals within the laser transmitter 26;
- transmitting through an optical fiber network 32 to an optical receiver 34;
- receiving by the optical receiver 34;
- demodulation and splitting;
- converting to frequencies suitable for processing by customer premises equipment.

5. The method according to the preceding claims 1-4, **characterized in that** a single local oscillator 220 is used for driving all frequency mixers of the transmitter 12 for converting satellite and digital terrestrial television signals to frequencies suitable for transmitting by a single laser.

6. The method according to the preceding claims 1-5, **characterized in that** a single local oscillator 320 is used for driving all frequency mixers of the receiver 14 for converting satellite and digital terrestrial television signals to frequencies suitable for processing by customer premises equipment.

7. The method according to the preceding claims 1-6, **characterized in that** any of the multiple following satellite output signals may be generated: vertical high frequency (1100-2150 MHz), horizontal high frequency (1100-2150 MHz), vertical low frequency (950-1950 MHz), horizontal low frequency (950-1950 MHz) signals, vertical wideband frequency (300-2350 MHZ) and horizontal wideband frequency (300-2350 MHz).

8. The method according to the preceding claims 1-7, **characterized in that** using this method, the original ultra high digital terrestrial television signals can be recovered.

9. An apparatus for transmitting down converted satellite and up converted ultra high frequency digital terrestrial television signals through the optical fiber network according to claims 1-8, comprising:
- the transmitter 12;
- the optical fiber 32;
- the receiver 14;
**characterized in that** the apparatus has:
- the up converter 20, present at the transmitter 12, for up converting ultra high frequency digital terrestrial television signals to the relatively high intermediate frequency signals;
- the down converter 44, present at the receiver 14, for the recovery of the ultra high frequency digital terrestrial television signals;
- the down converter 16, present at the transmitter 12, for down converting relatively high frequency satellite signals of vertical and horizontal polarizations;
- the up converter 18, present at the transmitter 12, for frequency shifting upwards of horizontal polarization signals;
- up converter 40, present at the receiver 14, for the recovery of original vertical and horizontal polarization satellite signals;
- the output down converter 46, present at the receiver 14, for the generating satellite output signals, suitable for processing by the customer premises equipment;
which allows transmitting a plurality of received satellite and digital terrestrial television signals through an optical fiber 32.

10. The apparatus according to the preceding claim 9, **characterized in that** the transmitter 12 comprises the following functional modules:
- the down converter 16 for down converting of relatively high frequency satellite vertical and horizontal polarizations signals to relatively low intermediate frequency signals;
- the up converter 18 for frequency shifting upwards of horizontal polarization signals;
- the up converter 20 for up converting of the ultra high frequency digital terrestrial television signals to the relatively high intermediate frequency signals;
- the combiner 24 for combining of the down converted satellite vertical polarization signals from the down converter 16 with the up converted satellite horizontal polarization signals from the up converter 18 with the up converted digital terrestrial television signals from the converter 20 and with through passed very high frequency digital terrestrial television signals.
- the single local oscillator source 22 for driving all frequency mixers of the transmitter 12;
- the laser transmitter 26 for transmitting modulated optical carrier through the optical fiber network 32 to the receiver 14.

11. The apparatus according to the preceding claims 9-10, **characterized in that** the receiver 14 comprises the following functional modules:
- the optical receiver 34 for receiving and demodulating the signals from the optical fiber network 32;
- the down converter 38 for down converting of relatively high intermediate frequency satellite horizontal polarizations signals to relatively low intermediate frequency signals;
- the down converter 44 for recovery of the ultra high frequency digital terrestrial television signals;
- the very high frequency digital terrestrial television signals are through passed;
- the up converter 40 for frequency shifting upwards of horizontal and vertical polarization signals;
- the single local oscillator source 42 for driving all frequency mixers of the receiver 14;
- the output down converter 46 for generating output signals, suitable for processing by the customer premises equipment.

12. The apparatus according to the preceding claims 9-11, **characterized in** th at the output down converter 46, present at the receiver 14,
- is connected to the optical fiber 32, which receives satellite and digital terrestrial television radio frequency signals;
- is connected to the customer premises equipment, where it delivers multiple output signals: vertical high frequency (1100-2150 MHz), horizontal high frequency (1100-2150 MHz), vertical low frequency (950-1950 MHz) or horizontal low frequency (950-1950 MHz) signals.
